Europäisches Patentamt

European Patent Office

Office européen des brevets

(11) Publication number: **0 602 325 A2**

# EUROPEAN PATENT APPLICATION

(21) Application number: 93114755.7

(22) Date of filing: 14.09.93

(51) Int. Cl.5: **G06F 11/26**

(30) Priority: **18.12.92 JP 338837/92**

(43) Date of publication of application:
**22.06.94 Bulletin 94/25**

(84) Designated Contracting States:
**DE FR GB**

(71) Applicant: **Kabushiki Kaisha Toshiba**
**72, Horikawa-cho**
**Saiwai-ku**
**Kawasaki-shi(JP)**

(72) Inventor: **Saitoh, Takashi, c/o Intellectual**
**Property Div.**
**K.K. TOSHIBA,**
**1-1 Shibaura 1-chome,**
**Minato-ku**
**Tokyo 105(JP)**
Inventor: **Tanimoto, Yasufumi, c/o Intellectual**
**Property Div.**
**K.K. TOSHIBA,**
**1-1 Shibaura 1-chome,**
**Minato-ku**
**Tokyo 105(JP)**

(74) Representative: **Blumbach Weser Bergen**
**Kramer Zwirner Hoffmann Patentanwälte**
**Radeckestrasse 43**
**D-81245 München (DE)**

(54) **Image forming apparatus which externally receives test/maintenance program.**

(57) Disclosed is an image forming apparatus which comprises a mechanism (1) for forming an image corresponding to image data supplied from an external device, an element (43c) for storing the image data, etc., a mechanism (46, 47) for receiving an operation test program from a second external device, to the storage element (43c), and a mechanism (1) for executing an operation test in accordance with the operation test program stored in the storage element (43c).

FIG. 1

EP 0 602 325 A2

The present invention relates to an image forming apparatus such as a laser printer for forming an image on a image transfer medium and is connected to various optional devices.

An image forming apparatus, such as a laser printer, is so designed that optional devices such as a paper feeder, a paper discharging device, and a paper-reversing device, and an auxiliary paper feeder device are connected to the laser printer, constituting an image forming system. The paper-reversing device and the auxiliary paper feeder are designed to print an image on both sides of a paper sheet.

In such an apparatus, a test/maintenance (operation test) program stored in the laser printer is executed when the mode is switched to a test/maintenance mode.

This apparatus requires means in the laser printer for invoking this test/maintenance mode, and a program stored in the laser printer to execute the test/maintenance mode. This inevitably increases the memory capacity. If the control processor of the laser printer is constituted of a one-chip microprocessor, the test/maintenance (operation test) program cannot be stored in the processor due to the limitation on the memory capacity.

It is therefore an object of the present invention to provide an image forming apparatus which has a control processor constituted of a one-chip microprocessor and can execute an operation test easily.

To achieve this object, according to one aspect of this invention, there is provided an image forming apparatus comprising means for forming an image corresponding to image data supplied from a first external device, onto an image-forming medium; storage means for storing the image data, etc.; means for receiving an operation test program from a second external device, and supplying the operation test program to the storage means; and means for performing an operation test in accordance with the operation test program stored in the storage means.

The image forming apparatus embodying the present invention, unlike the conventional apparatus, does not have an operation test program incorporated therein, but receives the program from an external device. In other words, this apparatus downloads the program from the second external device, e.g., a personal computer, and runs it whenever an operation test becomes necessary. As the operation test program need not be built in the memory in the apparatus, the memory can have a smaller memory capacity accordingly. This design can accomplish an image forming apparatus using a one-chip microprocessor which cannot have a very large memory capacity.

According to another aspect of this invention, there is provided an operation test method for an image forming apparatus, comprising the steps of externally receiving an operation test program for an image forming apparatus for forming an image corresponding to image data externally supplied onto an image-forming medium, to a data storing area incorporated in the image forming apparatus; and running the operation test program.

The operation test method for an image forming apparatus according to this invention performs an operation test based on a program supplied from an external device, such as a personal computer, not a built-in program in the image forming apparatus. As the operation test program need not be built in the memory in the apparatus, this memory can have a smaller memory capacity accordingly. This structure can accomplish an image forming apparatus using a one-chip microprocessor which cannot have a very large memory capacity.

This invention can be more fully understood from the following detailed description when taken in conjunction with the accompanying drawings, in which:

Fig. 1 is a block diagram illustrating showing the structure of an image forming apparatus according to one embodiment of the present invention, which has optional devices equipped in a laser printer;

Figs. 2 and 3 are cross sections showing the structure of the image forming apparatus in Fig. 1;

Fig. 4 is a block diagram showing the structure of the laser printer shown in Fig. 1;

Fig. 5 is a flowchart for explaining the invoking of a test/maintenance program;

Fig. 6 is a timing chart from a power-ON point to a point at which an echo back for an opening character is received;

Fig. 7 is a flowchart for explaining the operation of receiving the test/maintenance program;

Fig. 8 is a timing chart from a point at which an echo back for an opening character is sent to the beginning of program loading;

Fig. 9 is a timing chart from the end of the program loading, to the execution of the program, and to a point of data transmission/reception;

Fig. 10 is a timing chart from the end of the program loading, to the end of the execution of the program, and to a point at which next transmission is ready;

Fig. 11 is a flowchart for explaining a test/maintenance process when a personal computer is connected to the laser printer;

2

Fig. 12 is a flowchart for explaining a test/maintenance process when the personal computer is connected to the laser printer;

Fig. 13 is a timing chart from the power-ON of the personal computer to the power-ON of an optional device;

Fig. 14 is a timing chart from a point at which an echo back for an opening character is sent to the beginning of program loading;

Fig. 15 is a timing chart from the end of the program loading, to the execution of the program, and to a point of data transmission/reception;

Fig. 16 is a timing chart from the end of the program loading, to the end of the execution of the program, and to a point at which next transmission is ready;

Fig. 17 is a block diagram showing the controller for controlling the multi paper feeder which is one of the optional devices;

Fig. 18 is a block diagram showing the controller for controlling the paper-reversing section which is another optional device;

Fig. 19 is a block diagram showing the controller for controlling the paper-feeding section which is still another optional device;

Fig. 20 is a block diagram showing the controller for controlling the large-capacity feeder which is a further optional device;

Fig. 21 is a block diagram showing the control circuit for controlling the large-capacity stacker which is a further optional device; and

Fig. 22 is a block diagram showing the control circuit for controlling the mail box stacker which is another optional device.

A preferred embodiment of the present invention will now be described referring to the accompanying drawings.

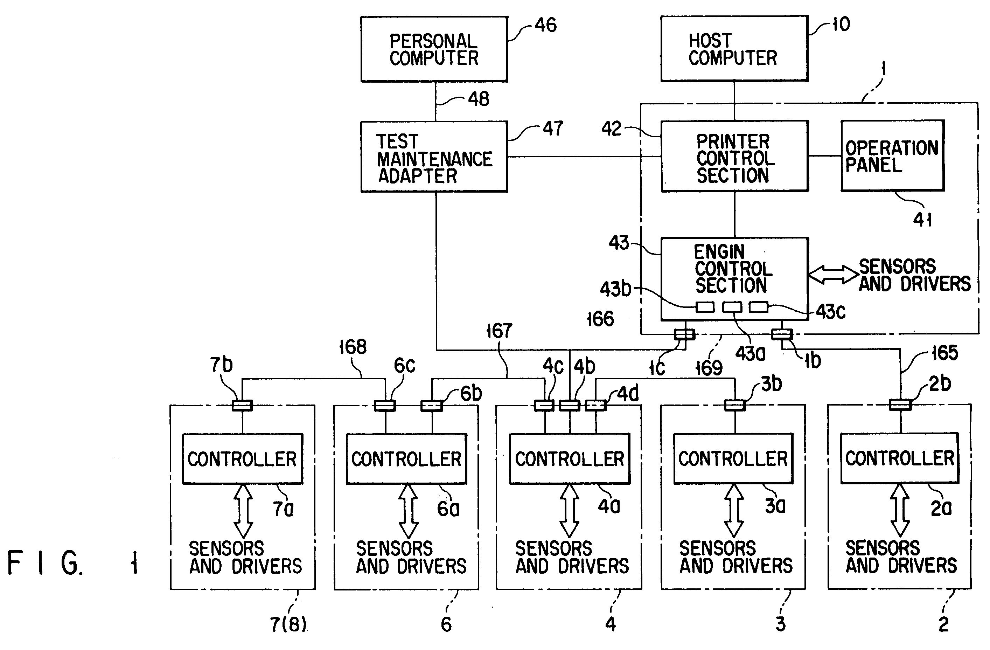

Fig. 1 is a block diagram showing an image forming system embodying this invention. The system comprises a laser printer 1 and several optional devices. The laser printer 1 is an image forming device designed to receive print data from a host computer 10 (i.e., first external device) and to print on a sheet of paper an image based on the data.

The optional devices include a multi paper feeder (MPF) 2, an automatic document duplexer (ADD) 5, a large-capacity feeder (LCF) 6, and a large-capacity stacker (LCS) 7, that can be replaced by a mail box stacker (MBS) 8. The automatic document duplexer 5 comprises a paper-reversing section 3 and a paper feeding section 4.

The laser printer 1 comprises an operation panel 41, a printer control section 42, an engine control section 43, and various sensors and drivers (not shown).

The operation panel 41, when operated, inputs various operation instructions to the printer control section 42. The printer control section 42 converts print data from the host computer 10 into bit image data. The engine control section 43 performs print control to print an image on a paper sheet (transfer medium) according to the bit image data supplied from the printer control section 42. Each of the optional devices 2, 3, 4, 6, and 7 (or 8) comprises a controller 2a, 3a, 4a, 6a, 7a, or 8a for controlling that optional device and sensors and drivers (neither shown).

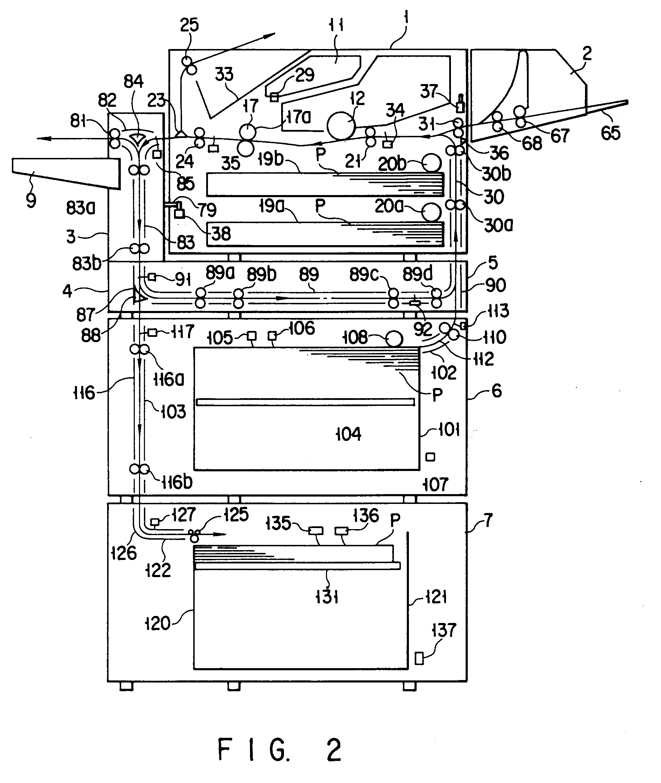

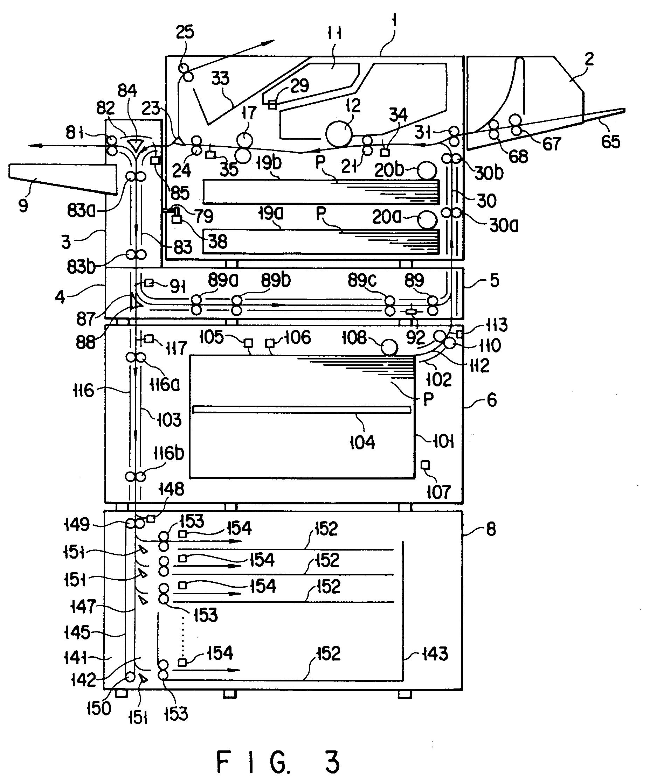

Figs. 2 and 3 are cross-sectional views showing the structure of the image forming apparatus in Fig. 1. As is shown in Fig. 2, for example, the paper feeder 2 is connected to the right side of the laser printer 1. The paper-reversing section 3 of the automatic document duplexer 5 is connected to the bottom of the laser printer 1. The paper-feeding section 4 of the automatic document duplexer 5 is connected to the bottom of the laser printer 1. The large-capacity feeder 6 is connected to the bottom of the paper-feeding section 4. The large-capacity stacker 7 is connected to the bottom of the large-capacity feeder 6. Each of the components 1, 2, 3, 4, 6 and 7 has two parallel rails on the bottom. Due to these rails, each component is correctly positioned when mounted on the immediately lower component.

A common paper tray 9 is loaded into the laser printer 1 and the discharge section of automatic document duplexer 5.

As is shown in Fig. 3, the large-capacity stacker 7 may be replaced by the mail box stacker 8. The paper-reversing section 3 is mounted on the attachment common to the large-capacity feeder 6, the large-capacity stacker 7, and the mail box stacker 8. Hence, the large-capacity feeder 6, the large-capacity stacker 7, and the mail box stacker 8 can operate, independently of each other, in combination with the paper-reversing section 3 and the laser printer 1.

The aforementioned engine control section 43 and the controllers 2a, 3a, 4a, 6a, 7a and 8a of the aforementioned optional devices 2, 3, 4, 6, 7 and 8 are each consituted of a one-chip microprocessor which comprises a control CPU, a ROM (e.g., EEPROM) for storing the control program and a RAM for data

3

storage. For example, the engine control section 43 comprises a CPU 43a, a 32-Kbyte ROM 43b and a 1028-bit RAM 43c. The ROM and RAM used in the optional devices have memory sizes of 16 Kbytes and 516 bits, respectively.

As shown in Fig. 1, the laser printer 1 and the optional devices are connected by means of connectors and cables (signal lines; option interface cables). To be more specific, a cable 165 connects the optional interface (I/F) connector 1b of the laser printer 1 to the optional I/F connector 2b of the paper feeder 2; a cable 166 connects the optional I/F connector 1c of the laser printer 1 to the optional I/F connector 4b of the paper-feeding section 4; a cable 167 connects the optional I/F connector 4c of the paper-feeding section 4 to the optional I/F connector 6b of the large-capacity feeder 6; a cable 168 connects the optional I/F connector 6c of the large-capacity feeder 6 to the optional I/F connector 7b of the large-capacity stacker 7; and a cable 169 connects the optional I/F connector 4d of the paper-feeding section 4 to the optional I/F connector 3b of the paper-reversing section 3.

The cables 166, 167, 168 and 169 have quite the same signal lines and a multi-drop structure.

As shown in Fig. 1, a personal computer 46 (second external device), which is used for test and maintenance and holds a test/maintenance application program, and a test/maintenance adapter 47 are provided separately from the aforementioned laser printer 1 and optional devices 2, 3, 4, 6, 7 and 8. The personal computer 46 is of an ordinary type equipped with a display a keyboard and a printer. This compute 46 is connected to the test/maintenance adapter 47 via a serial interface (RS232C) cable 48. The test/maintenance adapter 47 has a function to convert a signal from the personal computer 46 into a signal associated with the engine control section 43. The test/maintenance adapter 47 is designed to be loaded into a font cartridge slot (not shown) provided in the printer control section 42 of the laser printer 1 assembly 1 to receive DC power.

In testing or maintaining the laser printer 1, the test/maintenance adapter 47 is loaded into the front cartridge slot so that it is connected via the cable 166 to the option I/F connector 1c of the laser printer 1. This connection ensures data transmission/reception between the personal computer 46 and the engine control section 43 of the laser printer 1.

In testing or maintaining the optional device 3, 4, 6 or 7(8), the test/maintenance adapter 47 is loaded into the front cartridge slot so that it is connected via the cable 166 to the option I/F connector 4b of the optional device 4. The signal supplied over the cable 166 is also supplied to the cables 167, 168 and 169. This connection can permit data exchange between the personal computer 46 and the optional device 3, 4, 6 or 7(8).

With reference to Fig. 2, the laser printer 1 will now be described in detail.

Arranged within the housing of the printer 1 are: a laser optical system 11, a photosensitive drum 12, an electric charger (not shown), a developing device (not shown), an image transfer device (not shown), a preexposure device (not shown), a fixing device 17, and a cleaning device (not shown) -- all constituting a paper-processing system. The electric charger is a Scolotron, and the image transfer device is a Colotron. Also arranged within the housing are paper cassettes 19a and 19b, paper-feeding rollers 20a and 20b, a pair of aligning rollers 21, a paper guide (not shown), a gate 23, a pair of paper-discharging rollers 24, and another pair of paper-discharging rollers 25.

The laser optical system 11 comprises a semiconductor laser (not shown), a collimator lens (not shown), a polygon mirror (rotational mirror), a $f\theta$ lens (not shown), a mirror (not shown), and a mirror motor 29. The semiconductor laser emits a laser beam, and the collimator lens converts the laser beam to a parallel laser beam. The polygon mirror is a rotary member which has an octahedral mirror section for reflecting the laser beam supplied from the collimator lens and applying the beam along a scanning line. The mirror motor 29 rotates the polygon mirror.

The laser printer 1 forms an image in the following way. The laser optical system 11 applies a laser beam onto the photosensitive drum 12, in accordance with the image signal supplied from the host computer 10 or the operation panel 1a. Meanwhile, the photosensitive drum 12 is rotated in the direction of the arrow, and the electric charger electrically charges the surface of the drum 12. Then, the laser optical system 11 performs exposure on the photosensitive drum 12 in accordance with the image signal.

More specifically, the semiconductor laser emits a beam to the polygon mirror, which is rotated by the mirror motor 29. The polygon mirror thereby reflects the laser beam, to repeatedly scan the surface of the drum 12 with the beam at a constant speed, from the left end of the drum 12 to the right end thereof. As a result, an electrostatic latent image corresponding to the image data is formed on the surface of the photosensitive drum 12. The electrostatic latent image is converted into a visible image i.e., a toner image, as the developing device applies toner onto the surface of the photosensitive drum 12.

In the meantime, paper sheets P (media on which images are to be formed) are fed, one by one, from the paper cassette 19a or 19b by means of the paper-feeding roller 20a or 20b. Each paper sheet P is guided to the aligning rollers 21 along a passage 30 as it fed forward by a pair of rollers 30a and another pair of rollers 30b. The aligning rollers 21 feed the sheet P to the image transfer device.

Paper sheets P from the paper feeder 2 as one of the optional devices are fed to the aligning roller pair 21 by a pair of paper-feeding rollers 31 which in turn feed the paper sheets P to the image transfer device.

Also, a paper sheet P can be supplied to the image transfer device from the other optional devices, i.e., the automatic document duplexer 5, the large-capacity feeder 6, the large-capacity stacker 7, and the mail box which are provided at the lower portion of the printer assembly 1. Whenever necessary, a paper sheet P is fed from any of these optional devices to the aligning rollers 21 along the passage 30, and the aligning rollers 21 feed the sheet P to the image transfer device.

Any paper sheet P fed to the image transfer device is brought into contact with the surface of the photosensitive drum 12. The toner image is thereby transferred from the drum 12 onto the paper sheet P by the image transfer device. The sheet P, now bearing the toner image, separated 1 from the photosensitive drum 12 and supplied to the fixing device 17 along a paper guide. The fixing device 17 has a heat roller 17a and a roller paired with the heat roller 17a. As the paper sheet P passes through the nip between the heat roller 17a and said roller, transferred image is thermally fixed on the paper sheet P by a heater lamp (not shown) incorporated in the heat roller 17a.

The paper sheet P, now having the image fixed thereon, is discharged onto a paper tray 9 through a gate 23 by means of the paper-discharging rollers 24, or into an upper passage 32 through the gate 23 to the paper-discharging rollers 25, which discharge the sheet P onto a paper tray 33.

After the toner image has been transferred from the photosensitive drum 12 onto the paper sheet P, the cleaning device removes the residual toner from the drum 12. Thereafter, the pre-exposure device erases the residual image from the photosensitive drum 12, so that another image may be formed on the surface of the drum 12.

The photosensitive drum 12, the electric charger, the developing device, the pre-exposure device, the fixing device 17, and the cleaning device are combined together, forming an electrophotographic process unit which is removably placed within the housing of the laser printer 1.

A switch 34 is located in front of the aligning rollers 21 to detect sheet supply failure to the developing device. A switch 35 is provided in front of the paper-discharging rollers 24 to detect sheet discharge failure. Further, a paper-feeding detector 36 is arranged in front of the paper-feeding rollers 31 to detect the supply of a paper sheet P by hand or the paper feeder 2. A switch 37 is located above the paper-feeding detector 36 to detect the connection of the paper feeder 2 to the laser printer 1. Also, a switch 38 is secured on the left side of the paper cassettes 19a and 19b to detect the connection of the paper-reversing section 3 to the laser printer 1.

An engine control board and a printer control board are arranged between the paper cassettes 19a and 19b. Mounted on the engine control board is the engine control section 43 designed to control the electric components contained in the printer 1 to thereby accomplish an electrophotographic process. Mounted on the printer control board is the printer control section 42 designed to control the engine control section 43.

With reference to Fig. 2, the structure of the paper feeder 2 will be described.

The paper feeder 2 comprises a paper tray 65, a pickup roller (not shown), a pair of separating rollers 67, and a pair of aligning rollers 68. The pickup roller rotates, feeding the paper sheets P placed on the tray 65, one after another, to the separating roller pair 67.

The separating roller pair 67 include an upper roller and a lower roller. The upper roller is a driven roller to which a torque limiter (not shown) applies a predetermined load. The lower roller is a drive roller located opposite to the upper roller to drive the upper roller. The separating roller pair 67 separate paper sheets P, one by one, and feed this sheet P to the aligning rollers 68. The rollers 68 first align the paper sheet P and then supply it into the laser printer 1. The sheet P is fed farther into the printer 1 by means of the paper-feeding rollers 31 which are located within the housing of the laser printer 1.

With reference to Fig. 2, the automatic document duplexer 5, which comprises the paper-reversing section 3 and the paper-feeding section 4, will now be described in detail.

The paper-reversing section 3 comprises a pair of paper-discharging rollers 81, a first paper passage 81, a second paper passage 83, and a sorting gate 84. The first paper passage 82 guides a paper sheet P to the rollers 81 from the gate 23 of the laser printer 1. The second paper passage 83 guides a paper sheet P downward to the paper-feeding section 4, said sheet P having been discharged through the gate 23 or supplied by the paper-discharging rollers 81 rotating in the reverse direction. The sorting gate 84 guides a paper sheet P into either the first passage 82 or the second passage 83.

In operation, the paper sheet P discharged through the gate 23 of the laser printer 1 is guided through the first passage 82 to the gate 84 guides the sheet P to the paper-discharging rollers 81 or into the second paper passage 83. The sheet P guided to the paper-discharging rollers 81 is discharged onto the paper tray 9 by the paper-discharging rollers 81 rotating in the forward direction, or is guide toward the tray 9 for a distance equal to its length by the rollers 81 rotating in the forward direction and then back to the gate 84 by the rollers 81 rotating in the reverse direction. The paper sheet P, thus supplied to the gate 84, is guided into the second passage 83 and fed downward into, for example, the paper-feeding section 4.

A sensor 85 is located at the entrance to the first paper passage 82, for detecting the supply of a paper sheet P from the laser printer 1 into the first paper passage 82 of the paper-reversing section 3.

The second paper passage 83 is constituted by a pair of paper-feeding rollers 83a and another pair of paper-feeding rollers 83b.

A projection 79 protrudes from the right side of the paper-reversing section 3. When the section 3 is connected to the laser printer 1, the projection 79 pushes the switch 38 secured within the printer 1. As a result, the switch 38 detects that the section 3 has just been connected to the laser printer 1.

As shown in Fig. 2, the paper-feeding section 4 comprises three paper passages 87, 89 and 90 and one sorting gate 88. The fist paper passage 87 guides a paper sheet P downwards from the paper-reversing section 3. The second paper passage 89 branches from the first passage 87 by the sorting gate 88, for guiding a paper sheet P to the paper passage 30 of the laser printer 1. The third paper passage 90 is connected to the second passage 89 for guiding upwards a paper sheet P from an underlying device.

In operation, the paper sheet P fed from the paper-reversing section 3 is guided through the passage 87 to the sorting gate 88. The gate 88 guides the sheet P into an underlying device such as the large-capacity feeder 6 or the paper passage 89. The sheet P guided into the passage 89 is fed into the paper passage 30 of the laser printer 1. The sheet P supplied from an underlying device, such as the large-capacity feeder 6, is fed into the paper passage 30 of the printer 1 through the paper passages 90 and 89.

A sensor 91 is located in the vicinity of the entrance to the paper passage 87 of the paper-feeding section 4. The sensor 91 detects the paper sheet P from the paper-reversing section 3 passing through the passage 87 of the paper-feeding section 4. The paper passage 89 comprises three pairs of paper-feeding rollers, 89a, 89b and 89c, and one pair of aligning rollers 89d. A sensor 92 is located between the pair of paper-feeding rollers 89c and the pair of aligning rollers 89d. The sensor 92 detects the sheet P which is being fed through the paper passage 89.

The large-capacity feeder 6 comprises a storage section 101 for storing paper sheets P, a paper-feeding section 102 for feeding sheets P from the storage section 101, and a paper-feeding mechanism 103.

The storage section 101 has a platform 104 for holding a stack o paper sheets P and an elevator mechanism (not shown) urging the platform 104 to move upwards. The top of the sheets P in the storage section 101 is supported by claws (not shown).

The large-capacity feeder 6 further comprises a paper-empty switch 105, an upper-limit elevator switch 106, and a lower-limit elevator switch 107. The paper-empty switch 105 is located above the storage section 101 for detecting whether or not the section 101 is empty. The elevator switch 106 is also arranged above the storage section 105, for detecting if a predetermined number of sheets P have been fed out of the storage section 101. The elevator switch 107 is located outside the storage section 101 and at the bottom thereof, for detecting that the platform 104 is at its lowest possible position in the storage section 101.

When the predetermined number of sheets P have been fed from the storage section 101, the elevator switch 106 is turned on, driving an electric motor (not shown) in the forward direction for a predetermined period of time. This motor drives the elevator mechanism, which in turn lifts the platform 104. When the last paper sheet P is fed from the storage section 101, the paper-empty switch 105 is turned on, driving the motor in the reverse direction. As a result, the elevator mechanism lowers the platform 104 until the elevator switch 107 is turned on.

In the paper-feeding section 102, the topmost sheet P on the platform 104 is fed to the paper passage 90 of the paper-feeding section 4 through a passage 112, constituted by a paper guide (not shown), a pair of aligning rollers 110, and another paper guide (not shown). A pre-feeding sensor 113 detects the supply of the sheet in the passage 12.

The rotation of the motor is transmitted to the paper-feeding roller 108 by a pulley (not shown).

As is apparent from Fig. 2, the paper-feeding mechanism 103 comprises a paper passage 116 constituted by two pairs of paper-feeding rollers, 116a and 116b. The mechanism 103 feeds paper sheets P downwards to an underlying device from an overlying device. For example, the mechanism 103 feeds the sheet P from the passage 87 of the paper-feeding section 4 to either the large-capacity stacker 7 or the mail box stacker 8. A sensor 117, located near the paper-feeding rollers 116a, detects any sheet P supplied into the paper passage 112 from the passage 87 of the paper-feeding section 4.

The large-capacity stacker 7 will be described in detail with reference to Fig. 2.

The large-capacity stacker 7 comprises a storage section 121 for storing sheets P using an elevator mechanism 120 and a paper-feeding section 122 for feeding the sheets P into the section 122. In the paper-feeding section 122, a paper sheet P supplied from the paper passage 116 of the large-capacity feeder 6 is fed into the storage section 121 through a paper passage 126 constituted by paper guides (not shown) and paper-discharging rollers 125. A sensor 127, located near the guides, detects the sheet P which is passing through the paper passage 126.

The storage section 121 has a platform 131 for supporting paper sheets P. The platform 131 can be moved up and down by the elevator mechanism 120.

A paper-empty switch 135 is located above the storage section 121, for detecting whether or not the section 121 is empty. An upper-limit elevator switch 136 is arranged also above the storage section 121, for detecting that a predetermined number of sheets P can be placed on the platform 131. A lower-limit elevator switch 137 is located outside the storage section 121 and at the bottom thereof, for detecting that the platform 131 is at its lowest possible position in the storage section 121. In other words, the elevator switch 137 is used to detect that the storage section 121 is full of paper sheets P.

When the predetermined number of paper sheets P are placed on the platform 131, the elevator switch 136 is turned on. Then, the motor is driven for a predetermined period of time or until the elevator switch 136 is turned off, lowering the platform 131.

The mail box stacker 8 will now be described with reference to Fig. 3.

The mail box stacker 8 comprises a paper-feeding section 141, a paper-sorting section 142, and a storage section 143.

In the paper-feeding section 141, a paper sheet P supplied through the paper passage 116 from an overlying device e.g., the large-capacity feeder 6 is fed through a paper passage 147. The paper passage 147 is constituted by guides (not shown), a conveying belt 145, and a paper-feeding roller (not shown). A sensor 148 detects the feeding of the paper P through the paper passage 147.

The belt 145 is wound around two rollers 149 and 150, and is rotated by an electric motor (not shown).

A plurality of gates 151 are disposed as the sorting section 142 in the vicinity of the belt 145. The gates 151 sorts the sheets P, fed through the passage 147, to a plurality of paper trays 152 constituting the storage section 143. A pair of paper-discharging rollers 153 are provided between each gate 151 and its associated paper tray 152.

A sensor 154 is located in each paper tray 152 to detect each paper sheet P being placed onto the associated paper tray 152.

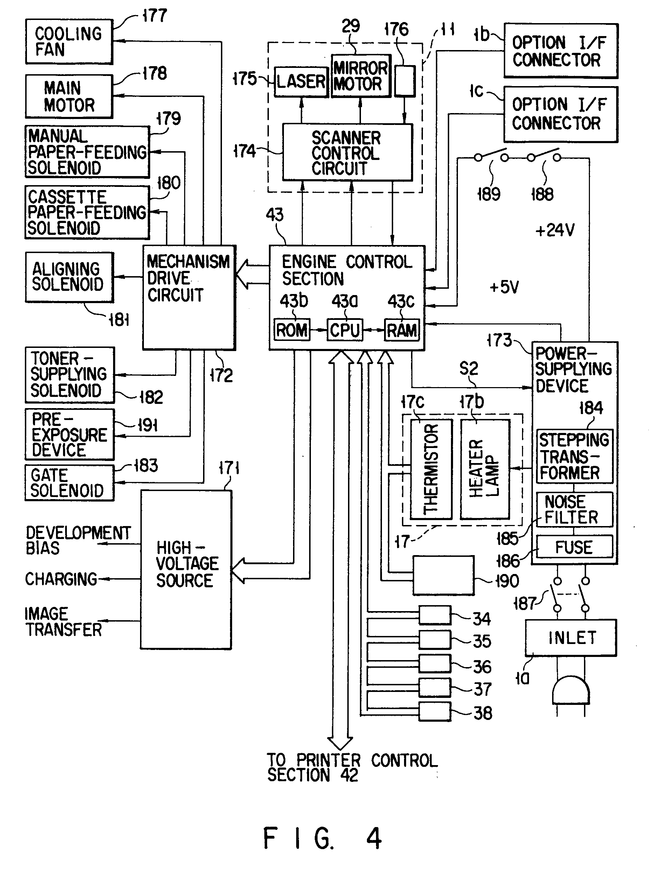

Fig. 4 is a block diagram showing the structure of the laser printer in Fig. 1. With reference to Fig. 4, the controllers incorporated in the laser printer 1 will now e described.

As has been described, the housing of the laser printer 1 contains the engine control section 43 which controls the electric components of the printer 1, to accomplish an electrophotographic process. Connected to the engine control section 43 are the laser optical system 11, the pre-exposure device 191 the fixing device 17, the sensors 34, 35, and 36 the switch 37 for detecting the connection of the feeder 2 to the printer 1, the switch 38 for detecting the connection of the section 3 to the printer 1, the option I/F connectors 1b and 1c, a high voltage source 171, a mechanism driver 172, and a power-supplying device 173.

The high-voltage source 171 supplies a development bias signal to a development-bias supplying section (not shown), a charging signal to the electric charger 13, and an image-transfer signal to the wire high-voltage supplying section (not shown) of the image transfer device, each being of a high voltage. The mechanism driver 172 is designed to drive motors and solenoids. Connected to this circuit 172 are a cooling fan 177, a main motor 178, a manual paper-feeding solenoid 179, a cassette paper-feeding solenoid 180, an aligning solenoid 181, a toner-supplying solenoid 182 a gate solenoid 183 and other various solenoids (not shown).

When the manual paper-feeding solenoid 179 is excited, the rotation of the main motor 178 is transmitted to the pair of paper-feeding rollers 31. When the cassette paper-feeding solenoid 180 is excited, the rotation of the main motor 178 is transmitted to either the paper-feeding roller 20a or the paper-feeding roller 20b.

When the aligning solenoid 181 is excited, the rotation of the main motor 178 is transmitted to the pair of aligning rollers 21. When the toner-supplying solenoid 182 is excited, the rotation of the main motor 1178 is transmitted to the toner-supplying roller (not shown) incorporated in the developing device 14. When the gate solenoid 183 is excited, the gate 23 is activated.

As shown in Fig. 4, the laser optical system 11 comprises a scanner controller 174 which performs the general control of the system 11. The controller 174 is connected to a laser-beam sensor 176 for detecting the laser beam from the semiconductor laser 175, and the mirror motor 29.

As shown in Fig. 4, too, the fixing device 17 has the heat roller 17a, the heater lamp 17b contained in the roller 17a, and a thermistor (heater temperature sensor) 17c designed to detect the temperature near the heat roller 17a.

As shown in Fig. 4, the power-supplying device 173 comprises a switching transformer 184, a noise filter 185 and fuse 186. Thus, the switching transformer 184 is connected to an inlet 1a through the noise filter 185, the fuse 186, and a main switch 187.

When the main switch 187 is turned on, the power supplying device 173 outputs a power-supply voltage of +5V and a power-supply voltage of +24V. The voltage of +5V is applied to the engine control section 43, and hence to the printer control section 42. The voltage of +24V is applied to a cover switch 188, and then to a cover switch 189, and finally to the engine control section 43. The voltage of +24V is applied from the control section 43 to the scanner controller 174, the high-voltage source 171, and the mechanism driver 172.

The scanner controller 174 applies the voltage of +25V to the semiconductor laser 175 and the mirror motor 29 to drive them. The mechanism driver 172 applies the voltage of +25V to the pre-exposure device 191, the main motor 178, the manual paper-feeding solenoid 179, the cassette paper-feeding solenoid 180, the aligning solenoid 181, the toner-supplying solenoid 182, the gate solenoid 183, and the cooling fan 177, thereby driving these components.

The power-supplying device 173 further comprises a lamp driver (not shown) for driving the heater lamp 17b of the fixing device 17. This lamp driver is of zero-cross switching type which comprises, for example, a triac and a phototriac coupler. The light-emitting diode (LED) of the phototriac coupler is driven with the voltage of +24V. As is known in the art, when the LED is turned on or off, the light-receiving phototriac is turned on or off at the zero-cross point of the AC power supply. As a result, this phototriac turns on or off the next-stage triac as the main switch, whereby the supply of an AC current to the heater lamp 17b is permitted or inhibited.

The engine control section 43 supplies a heater control signal to the power-supplying device 173 to turn on or off the LED. The thermistor 17c generates a signal representing the detected temperature in the fixing device 17. This signal is supplied to the engine control section 43.

The cover switch 188 is turned off when the top cover (not shown) of the laser printer 1 is rotated upwards to an opened position. The cover switch 189 is turned off when the rear cover (not shown) of the printer 1 is opened. Hence, when the top cover or the rear cover, or both are opened, the supply of the +24V voltage to the engine control section 43 is inhibited, whereby the laser 175, the motor 29, the power supply 171, the main motor 178, the solenoids 179 to 183, the cooling fan 177, and the heater lamp 17b can no longer operate. Therefore, the operator can have an access into the laser printer 1 without any danger.

With the above structure, the test/maintenance process for the laser printer 1 will now be described.

At this time, the test/maintenance adapter 47 is inserted into the font cartridge slot and is connected via the cable 166 to the option I/F connector 1c of the laser printer 1. Accordingly, the personal computer 46 can exchange data with the engine control section 43 of the laser printer 1. First, the control program that is used in the engine control section 43 is divided into subprograms for the individual control tasks. The control program includes a loader program for an option task, one of the control tasks.

The loader program is invoked when the personal computer 46 returns a specific status (maintenance mode request status [60h]) via the test/maintenance adapter 47 for a specific command that the engine control section 43 outputs via the option I/F connector 1c upon termination of the initialization of the engine control section 43 at the time the power is given to the laser printer 1. The loader program receives a test/maintenance program from the personal computer 46 via the test/maintenance adapter 47 and maps the program into the RAM 43c of the engine control section 43. When the entire program is received, the loader program runs the received program.

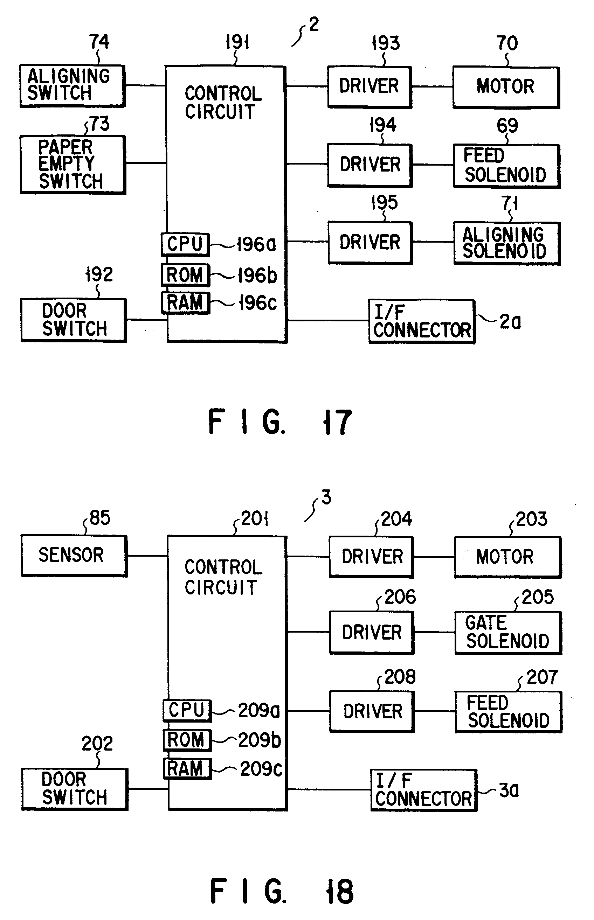

Fig. 17 shows a control circuit 191 for controlling the multi paper feeder 2 which is one of the optional devices incorporated in the image forming system according to the present invention. The control circuit will be described.

As shown in Fig. 17, the controller 191 comprises a CPU 196a, a ROM 196b, and a RAM 196c. Connected to the circuit 191 are: the I/F connector 2a, the paper empty switch 73, the aligning switch 74, a door switch 192, a driver 193 for driving an electric motor 70, a driver 194 for driving a paper-feeding solenoid 69, and a driver 195 for driving an aligning solenoid 71. The motor 70 is used to rotate the rollers 67 and 68, the paper-feeding solenoid 69 to transmit a drive force to the pair of rollers 67, and aligning solenoid 71 to transmit a drive force to the pair of rollers 68.

Fig. 18 shows a control circuit 201 for controlling the paper-reversing section 3 which is another optional device. This control circuit 201 will be described, with reference to Fig. 18.

The control circuit 201 comprises a CPU 209a, a ROM 209b, and a RAM 209c. Connected to the control circuit 201 are: the I/F connector 3a, the sensor 85, a door switch 202, a driver 204 for driving an electric motor 203, a driver 206 for driving a gate solenoid 205, a driver 208 for driving a feed solenoid 207. The motor 205 is provided to rotate the pairs of rollers 81, 83a and 83b, the gate solenoid 205 to drive the gate 84, and the feed solenoid 207 to transmit a drive force to the pairs of rollers 81, 83a and 83b.

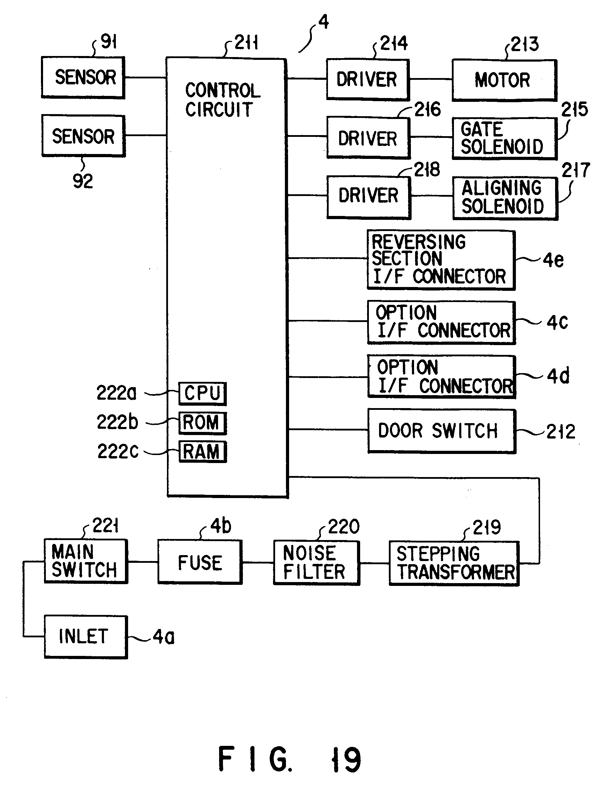

Fig. 19 shows a control circuit 211 for controlling the paper-feeding section 4 which is still another optional device. The control circuit 211 will be described, with reference to Fig. 19.

The control circuit 211 comprises a CPU 222a, a ROM 222b, and a RAM 222c. Connected to this circuit 211 are: the option I/F connectors 4c and 4c, the reversing section I/F connector 4e, the sensors 91 and 92, a door switch 212, a driver 214 for driving an electric motor 213, a driver 216 for driving a gate solenoid 215, a driver 218 for driving an aligning solenoid 217, and a stepping transformer 219.

When driven, the gate solenoid 215 moves the gate 88, witching the position thereof. When driven, the aligning solenoid 217 transmits a drive force to the pair of aligning rollers 89d.

The stepping transformer 219 is connected to a noise filter 220, which in turn is connected by a fuse 4b to a main switch 221. The main switch 221 is connected to the inlet 4a.

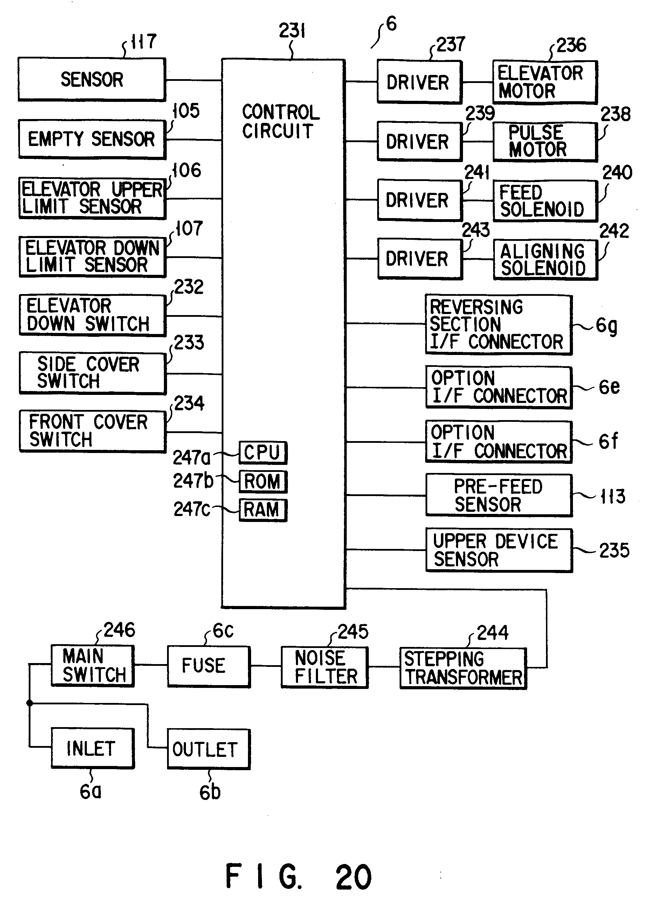

Fig. 20 illustrates the control circuit 231 for controlling the large-capacity feeder 6 which is a further optional device. The control circuit 231 will be described, with reference to Fig. 20.

The control circuit 231 comprises a CPU 247a, a ROM 247b, and a RAM 247c. Connected to this control circuit 231 are: the option I/F connectors 6e and 6f, the reversing section connector 6g, the paper empty switch 105, the elevator upper limit sensor 106, the elevator lower limit sensor 107, the pre-feed sensor 113, and the sensor 117. Also connected to the circuit 231 are: an elevator down switch 232, a side cover switch 233, a front cover switch 234, an upper device switch 235, a drivers 237, 239, 241 and 243, and a stepping transformer 244. The driver 237 is used to drive an elevator motor 236, the driver 239 to drive a pulse motor 238, the driver 241 to drive a feed solenoid 240, and the driver 243 to drive a aligning solenoid 243.

When turned on, the elevator down switch 232 causes to the platform 106 to move downwards. The upper device switch 235 is turned on when a member (not shown) of the device located above, for example, the paper-feeding section 4, abuts on it. When driven, the elevator motor 236 moves the platform 104 up or down. The pulse motor 238 is driven to rotate the rollers 116a, 110b, 110, and 108. When driven, the feed solenoid 240 transmits a drive force from the pulse motor 238 to the paper-feeding roller 108, to thereby rotate the roller 108. When driven, the aligning solenoid 243 transmits a drive force from the pulse motor 238 to the aligning rollers 110, thereby to thereby rotate these rollers 110.

The stepping transformer 244 is connected to a noise filter 245, which in turn is connected by a fuse 6c to the main switch 246. The main switch 246 is connected to the inlet 6a and the outlet 6b.

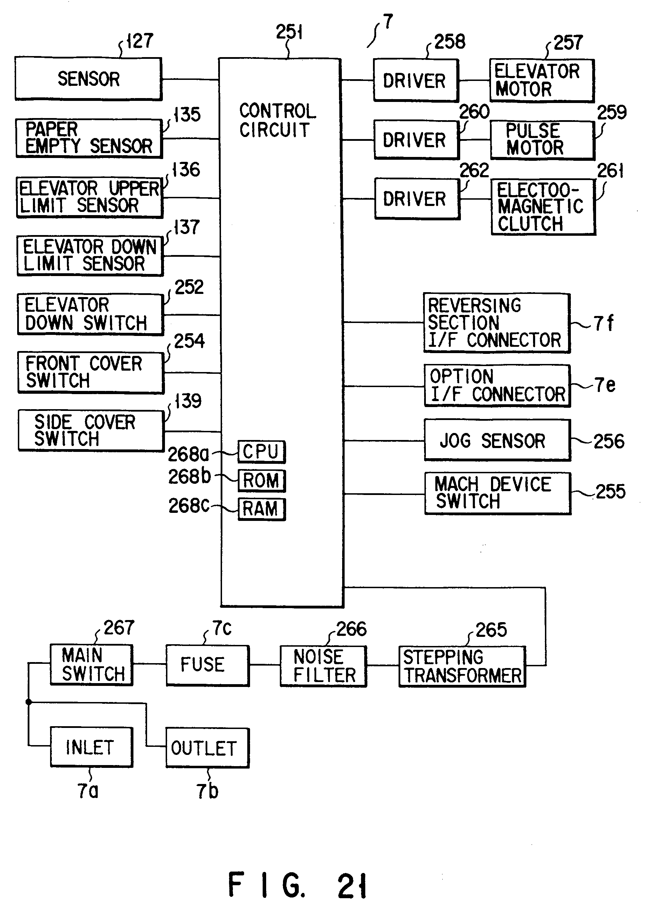

Fig. 21 shows a control circuit 251 for controlling the large-capacity stacker 7 which is a further optional device. This circuit 251 will be described, with reference to Fig. 21.

The control circuit 251 comprises a CPU 268a, a ROM 268b, and a RAM 269c. Connected to the circuit 251 are: the option I/F connector 7e, the reversing section I/F connector 7f, a sensor 127, a paper empty sensor 135, an elevator upper sensor 136, an elevator down sensor 137, a side cover switch 139, an elevator down switch 252, a front cover switch 254, and a mach device switch 255. Also connected to the control circuit 251 are: a jog sensor 256, drivers 258, 260, 262 and 264, and a stepping transformer 265. The jog sensor 256 is used to detect the state of a jogger mechanism 130. The driver 258 is provided to drive an elevator motor 257, the driver 260 to drive a pulse motor 257, the driver 262 to drive an electromagnetic clutch 261, and the driver 264 to drive a jog solenoid 263.

When turned on, the elevator down switch 254 causes to the platform 131 to move downwards. The upper device switch 255 is turned on when a member (not shown) of the device located above, for example, the large-capacity feeder 6, abuts on it.

The stepping transformer 265 is connected to a noise filter 266. The noise filter 266 is connected by the fuse 7c to a main switch 267. The main switch 267 is connected to the inlet 7a and the outlet 7b.

When driven, the elevator motor 257 moves the platform 131 up or down. When driven, the pulse motor 249 rotates the rollers 125. When driven, the electromagnetic clutch 261 moves the jogger mechanism 130 up or down.

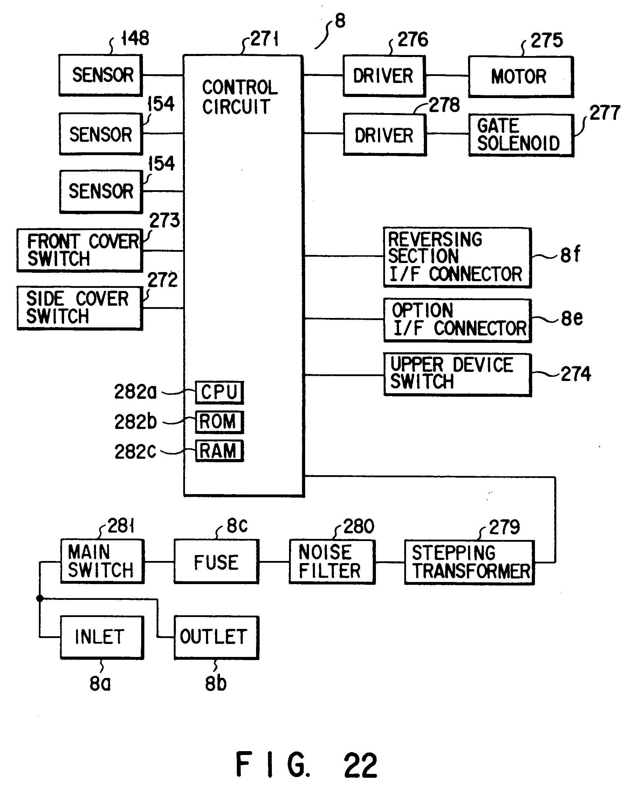

Fig. 22 illustrates a control circuit 271 for controlling the mail box stacker 8 which is another optional device. The circuit 271 will be described, with reference to Fig. 22.

The control circuit 271 comprises a CPU 282a, a ROM 282b, and a RAM 282c. Connected to the circuit 271 are: the option I/F connector 82, the reversing I/F connector 8f, sensors 148, 154 and so on, a side cover switch 272, a front cover switch 273, an upper device switch 274, drivers 276 and 278, and a stepping transformer 279.

The upper device switch 274 is turned on when a member (not shown) of the device located above, for example, the large-capacity feeder 6, abuts on it. The driver 276 is provided to drive an electric motor 275, the driver 278 to drive a gate solenoid 177. When driven, the motor 275 rotates the rollers 148, 154 and 153, to thereby drive the belt 145. When driven, the gate solenoid 267 drives the selected one of the gates 151.

The stepping transformer 279 is connected to a noise filter 280. The noise filter 280 is connected by the fuse 8c to a main switch 281. The main switch 281 is connected the inlet 8a and the outlet 8b.

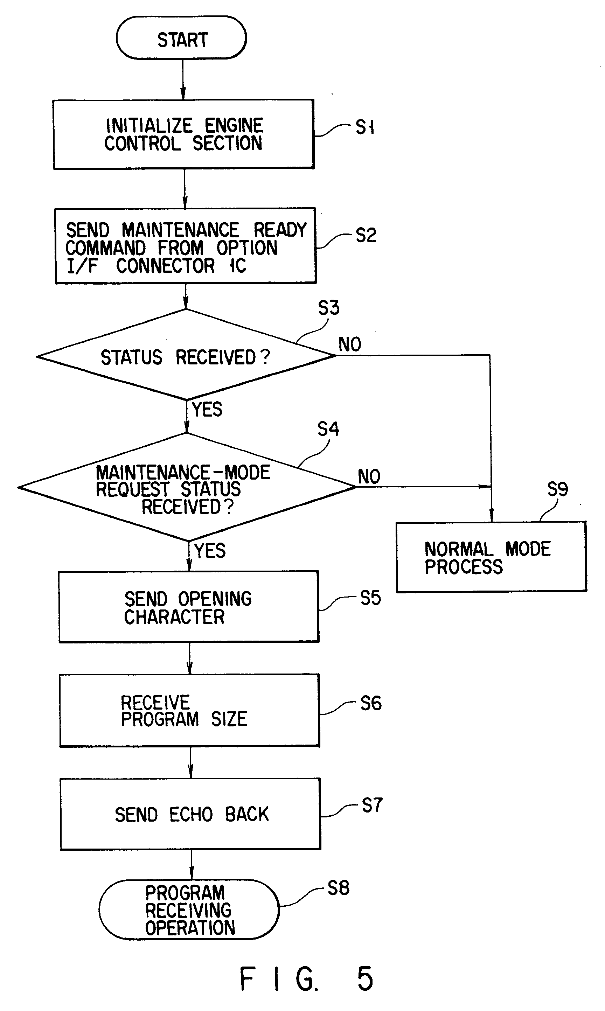

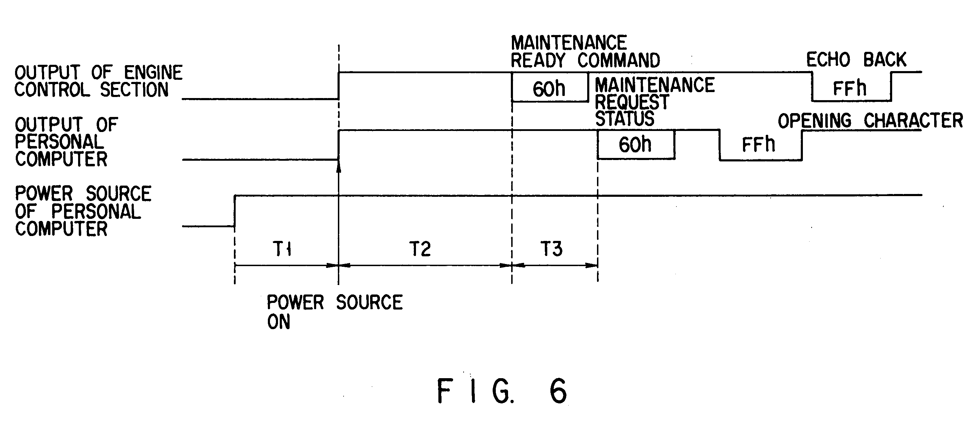

Fig. 5 is a flowchart for explaining the invoking of a test/maintenance program, and Fig. 6 is a timing chart from a power-ON point to a point at which an echo back for an opening character is received.

This flowchart is basically for the process of the test/maintenance of the laser printer 1, but almost the same procedures are taken for the test/maintenance program for the optional devices 2 to 8. Therefore, the following description is also applied to the latter case.

To begin with, how to invoke the program will b described referring to the flowchart in Fig. 5 and the timing chart in Fig. 6.

When the initialization of the engine control section 43 is complete (S1), the engine control section 43 sends a maintenance ready command [60h] (S2). When the personal computer 46 receives this command via the test/maintenance adapter 47 (S3), the computer 46 returns a maintenance mode request status [60h] to the engine control section 43 (S4).

After receiving the maintenance mode request status, the engine control section 43 sends an opening character (S5), receives a program size (S6), sends an echo back (S7), and then invokes the loader program (S8).

If the maintenance mode request status is not returned after 100 ms after the maintenance ready command has been sent out, however, the loader program will not be invoked (S9).

In Fig. 6, T1 is a time sufficient for the application program of the personal computer 46 to be invoked after the power has been given to the personal computer 46. T2 is a time for the maintenance mode request status to be sent out via the option I/F connector 1c after the power has been given to the laser printer 1, and is 100 msec or longer. T3 is the maximum wait time to receive the maintenance mode request status after the maintenance ready command has been sent out, and is 100 msec.

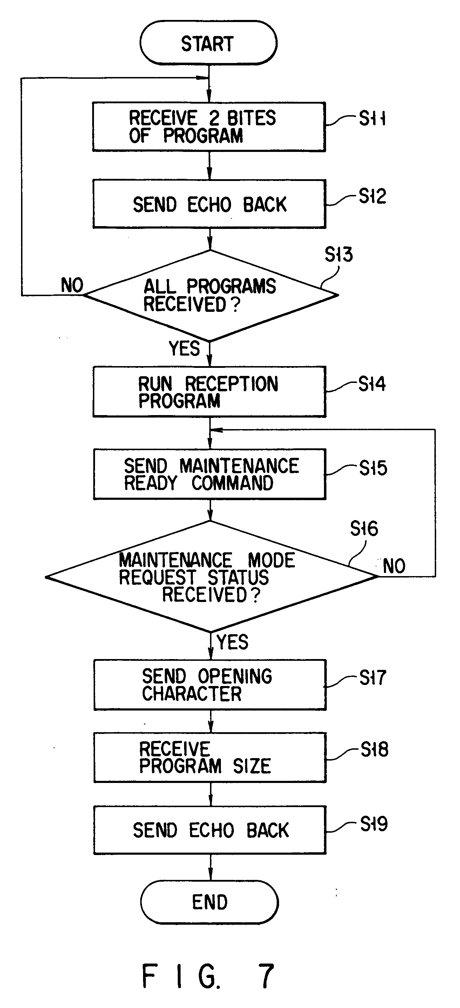

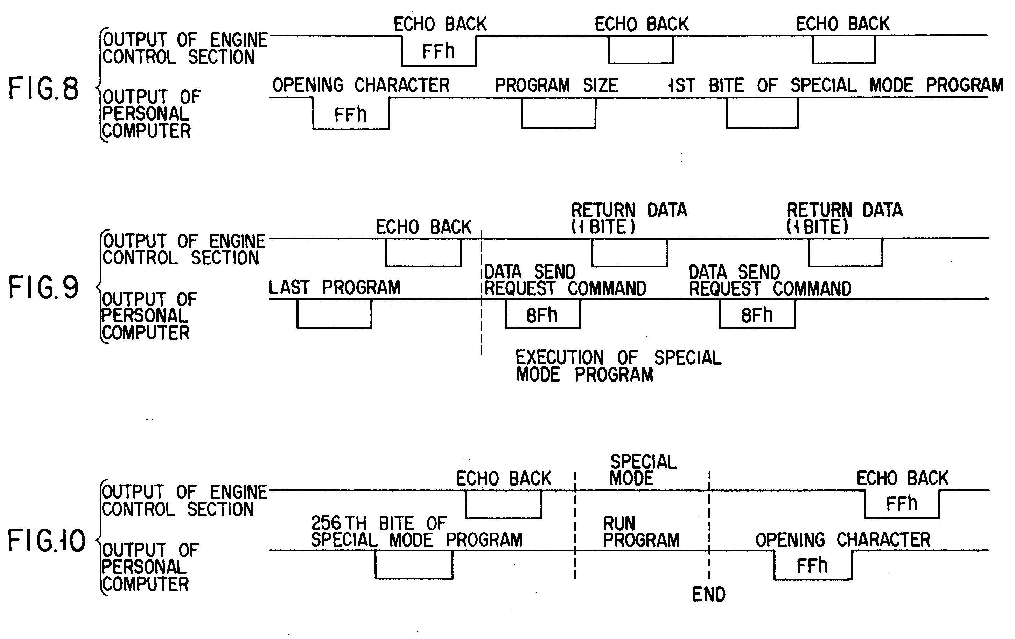

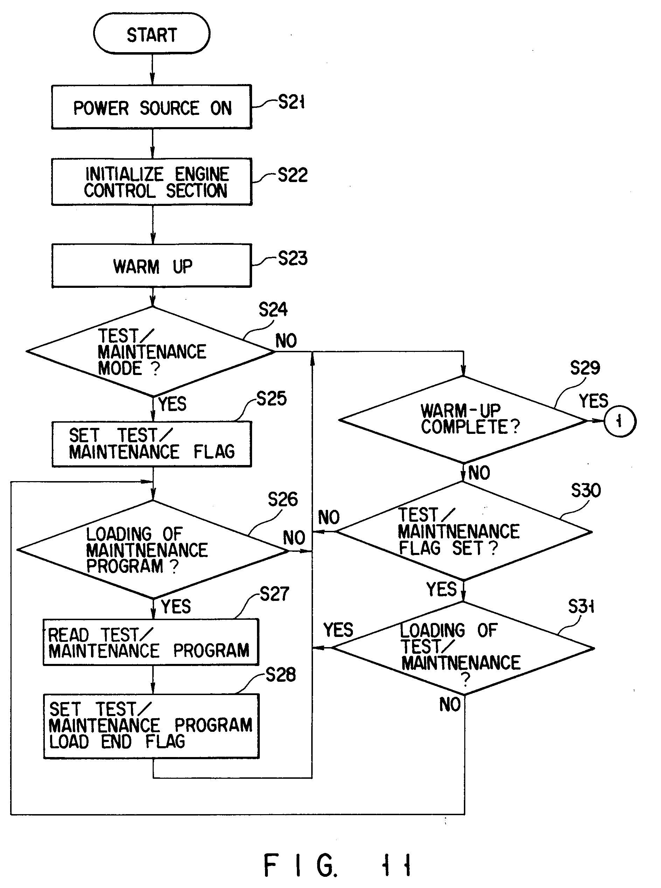

Fig. 7 is a flowchart for explaining the operation of receiving the test/maintenance program, Fig. 8 is a timing chart from a point at which an echo back for an opening character is sent to the beginning of program loading, Fig. 9 is a timing chart from the end of the program loading, to the execution of the program, and to a point of data transmission/reception, and Fig. 10 is a timing chart from the end of the program loading, to the end of the execution of the program, and to a point at which next transmission is ready.

The communication protocol will be described referring to the flowchart in Fig. 7 and the timing charts given in Figs. 8 to 10.

The communication protocol for the loader program to load a program from the personal computer 46 uses a clock asynchronous serial interface.

Upon reception of an opening character OFFh (S5 in Fig. 5), the personal computer 46 sends a program size (S6). The loader program returns (echo back) the received program size to the personal computer 46 (S7).

Thereafter, the personal computer 46 keeps sending data until the designated program size is reached (128 bytes at the maximum) (S11, S12 and S13 in Fig. 6). The loader program stores the received data as a program into the RAM 43c (in a 128-byte area from address 300h to 37Fh) in the engine control section 43, and echoes back to the personal computer 46 for each data (S12). This operation continues until the reception of the entire program is complete (S13). When the reception of the designated size of data is complete, the loader program executes the program from the address 300h (S14).

The engine control section 43 keeps sending the maintenance ready command (S15) until it receives the maintenance mode request status (16). Upon reception of this signal, the engine control section 43 sends an opening character (S17), receives a program size (S18) and sends a echo back (S19), completing the operation sequence.

If the echo back to the personal computer 46 is checked and a transfer error is detected, the engine control section 43 is initialized and the program transmission will be repeated.

To receive information in the engine control section 43 as data, the personal computer 46 sends a data send request code [8Fh]. Upon reception of this code, the engine control section 43 sends data. After sending this code, the personal computer 46 performs polling of data reception from the engine control section 43 and carries out a reception process.

When the execution of the program is complete, the personal computer 46 can send the next program by sending an opening character.

At this time, the engine control section 43 waits for the opening character from the personal computer 46 and keeps waiting until it receives the opening character.

A description will now be given of how the personal computer 46 executes the test/maintenance mode.

First, when an application program (MU750) for test/maintenance is loaded into the personal computer 46 and this application program and a printer are activated, a main menu screen is displayed and the following message is displayed to request the entry of an item number.

"Select menu no."

When the desired item number is entered, the associated item will be executed. Table 1 gives a list of item numbers.

Table 1

| Item No. | Item Names | Contents of Test |
|---|---|---|
| 1 | Cassette Paper Feed Solenoid Test | Repeate alternate ON and OFF of cassette feed solenoid 180a for 2 sec ten times |
| 2 | Cassette Paper Feed Solenoid Test | Repeate alternate ON and OFF of cassette feed solenoid 180b for 2 sec ten times |
| 3 | Aligning Solenoid Test | Repeate alternate ON and OFF of aligning solenoid 181 for 2 sec ten times |
| 4 | Gate Solenoid Test | Repeate alternate ON and OFF of gate solenoid 183 for 2 sec ten times |
| 5 | Manual Paper Feed Solenoid Test | Repeate alternate ON and OFF of manual paper feed solenoid 179 for 2 sec ten times |
| 6 | Toner Supply Solenoid Test | Repeate alternate ON and OFF of toner supply solenoid 182 for 2 sec ten times |
| 7 | Paper Feed Solenoid Test | Repeate alternate ON and OFF of paper feed solenoid 69 for 2 sec ten times |
| 8 | Aligning Solenoid | Repeate alternate ON and OFF of aligning solenoid 71 |
| 9 | Main Motor Test | Rotate main motor 178 for 60 sec. |
| 10 | Motor Test | Rotate motor 70 for 60 sec. |

(continued)

Table 1

| Item No. | Item Names | Contents of Test |
|---|---|---|
| 11 | Front Exposure Lamp Test | Turn on front exposure lamp for 60 sec. |
| 12 | Main/Separation Charger Test | Drive the high voltage source 171 to enable a high-voltage output or main/separation charge for 60 sec. |
| 13 | Development Bias Test | Drive the high voltage source 171 to enable a high-voltage output for development bias for 60 sec. |
| 14 | Transfer Charger Test | Drive the high voltage source 171 to enable a high voltage output for transfer charge for 60 sec. |
| 15 | Heater Sensor Test | Read the output of heater temperature sensor 17c five times at intervals of 10 sec. and convert them into voltage values to be displayed |
| 16 | EEPROM Data Read/Write | Read and write various data from and in EEPROM (not shown) |
| 17 | Program Version Exit | Display the version of engine ROM Terminate this menu |

If the item No. 1/14 is executed, nothing will be displayed on the screen of the personal computer 46, and when it is terminated, the screen automatically returns to the main menu.

For the other items, the results will be displayed on the screen. The following will describe the case of the item 15 "Heater Sensor Test".

The name of the item 15 and the test contents are "Heater Sensor Test: Read the output of temperature sensor five times at intervals of 10 sec., and it is converted into a voltage value and displayed."

When this item is displayed, first the main motor 178 and heater lamp 176 are turned on. After 20 sec. passes, the output of the thermistor 176 is read five times at intervals of 5 sec. When the reading is finished, the main motor 178 and heater lamp 176 are turned off.

The read data is converted into a voltage value, which is in turn displayed on the screen. Displayed on the right hand side of the screen is a table showing the correlation with temperature. When the following message appears after a while,

OK (anykey)?

The depression of any key returns to the main menu screen.

The program that is run in special mode can self-diagnose the system, and the hardware libraries, etc. of the laser printer 1 that the program can use is the absolute address of the engine control section 43.

As the program is culled by a subroutine call from one task in the engine control section 43, the end of the program is set command (operation code E7). If one job cannot be stared in an area of 256 bytes, the program is divided into a plurality of modules, which are than executed.

The personal computer 46 rends the program satisfying the specified function to the engine control section 43 in accordance with the diagnostic menu.

The following describes the program that is send from the personal computer 46 in association with the item 2, "Paper Feed Salenoid 0 Test."

The contents of the program are to sepeat ON and OFF of the paper feed solenoide 0 for 2 sec. ten times respectively.

The following libraries 'collection of organized programs' are prepared as programs that the personal computer 46 can use. The libraries include those while commonly use the control program of the engine control section 43 and those frequently used for test/maintenance. As the libraries, EEPROM data reading, EEPROM data writing, main motor test, heater temperature sensor test, wait for given time and data send are prepared.

Those libraries are called by the call command, or changing the JMP command (program counter (not shown)) of the absolute address, and jumping to the target program, depending on the program to the sent.

1) EEPROM data reading

Read data at the specified address in EEPROM 43b

```
calling method          call #V rd eer        code CB
necessary stack number       5
parameter                    A        read address 1 byte
return parameter             A        read data 2 bytes
```

2) EEPROM data writing

Write data at the specified address in EEPROM 43b.

```
calling method          Cable #V ur eer       Code CC
necessary stack number       5
parameter                    A        write address 1 byte
                             T        write data 2 bytes
return parameter          none
```

3) Main motor test

```
Rotate main motor       178 for 180 sec.
calling method          jmp mmr tst        Code A6 30FF
necessary stack number       6



parameter                    none
return parameter             none
```

4) Heater temperature sensor test the main motor 178 is rotated, and after 20 rec passes, the output of the toner sensor 190 is read five times at intervals of 10 sec. through the option interface. After passage of further 20 sec., the main motor 178 is stopped.

```
Calling method            jmp htr tst      Code A6 36FF
necessary stack number 6
parameter                 none
return parameter          none
```

5) Wait for given time
Wait for the specified time. The wait time is the specified parameter multiplied by 10, and is expressed by ms.

```
Calling method          Cable #V wai tsk     Code C5
necessary stack number  6
parameter               A    wait time 2 bytes (0-65536)
return parameter        none
```

6) Data send
The specified data is output from the option interface.

```
Calling method          Call SND DATA        Code A7 20FF
necessary stack number 6
parameter               output data          1 byte
return parameter        none
```

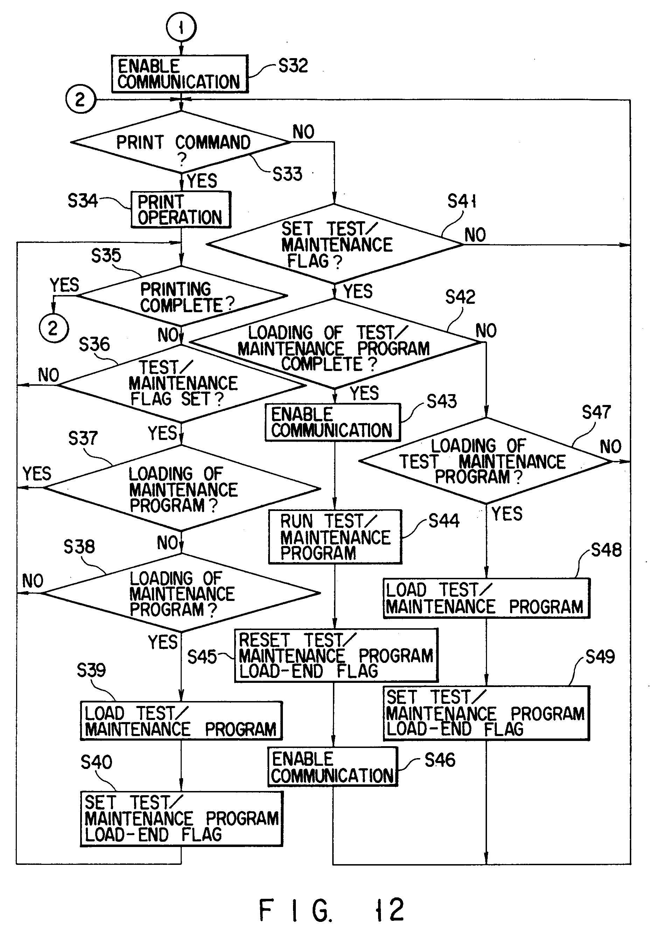

Fig. 11 is a flowchart for explaining the test/maintenance process when personal computer is connected to the laser printer. In this embodiment, the test/maintenance of the laser printer 1 is executed while printing. The contents of this test/maintenance mode are illustrated in the flowcharts in Figs. 11 and 12.

Those flowchart are basically for the process of the test/maintenance program for the laser printer 1. Nearly the same procedures are involved in the process of the test/maintenance program for the optional devices 2 to 8, so that the description of those flowcharts are also applied to the latter case.

The test/maintenance program can be read while printing, and can be executed after printing.

This can be confirmed by, for example, charging the leading edge of a sheet and the value of a print position correction, stored in the EEPROM 436, in test/maintenance mode and printing the altered values promptly.

After the power is given (S21), program the initializes the engine control section (S22) and starts warm-up (S23). Then, whether or not it is the test/maintenance mode is asked (S24). If it is YES, the test/maintenance flag is set (S25). Then, it is determined whether or not the maintenance program should be read (S26). If it is YES, the maintenance program is read (S27). Then, the test/maintenance program load end flag is set (S28), and it is then determined if the warm-up is complete (S29). If it is NO, it is determined if the test/maintenance flag has been set (S30). If it is YES, it is determined whether or not the loading of the test/maintenance program is complete (S31). If it is NO, it is determined again whether or not the maintenance program is read (S26).

When warm-up is finished (S29), communication becomes possible (S32) and it is determined if a print command has been given (S33). If it is YES, printing is executed (S34). It is then determined if printing is complete (S35), if the test/maintenance flag is set (S36), and if the loading of the test/maintenance program is finished (S37). If the decision in S37 is NO, it is determined if the maintenance program is to be read (S38). If the decision in S38 is YES, the test/maintenance program is read (S39) and the test/maintenance program load-end flag is set (S40). Then, it is determined again if printing is finished (S35).

If no print command has been given, it is determined if the test/maintenance flag is set (S41). When the decision is YES, it is then determined if the loading of the test/maintenance program is finished (S42). If the decision is YES, communication is disabled (S43). Then, the test/maintenance program is executed (S44),

14

and the test/maintenance program load end flag is reset (S45), enabling communication (S46).

When the test/maintenance program has not been loaded, it is determined whether or not the program should be loaded (S47). When the decision is YES, the test/maintenance program is loaded (S48) followed by the setting of the load-end flag (S49).

A description will now be given of the test/maintenance process for optional devices.

At this time, the test/maintenance adapter 47 is loaded into the aforementioned font cartridge slot, and the option I/F connector 46 of the optional device 4 is connected to the test/maintenance adapter 47 by the cable 166. The signals that are supplied over the cable 166 are also supplied to the cables 167, 168 and 169. Accordingly, data exchange between the personal computer 46 and the optional devices 3, 4, 6 or 7(8) becomes possible.

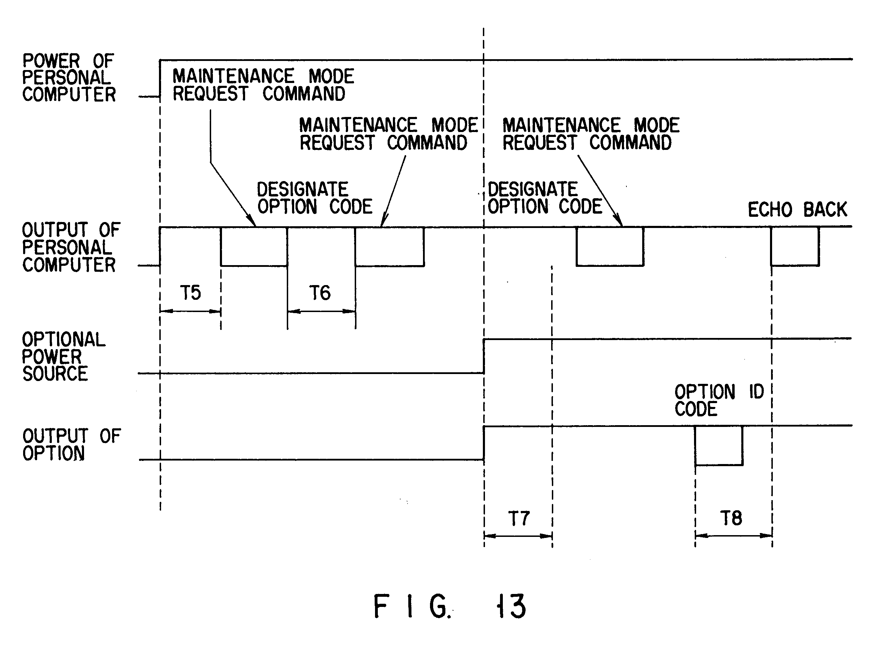

Fig. 13 presents a timing chart from the power ON of the personal computer to the power ON of an optional device. First, how to invoke the program will be described referring to the timing chart shown in Fig. 13.

(1) After power is given, the personal computer loads the application program. After the loading is complete, the designated option code is sent via the test/maintenance adapter 47 in accordance with the contents of the menu mode specified for an optional device. The following are designated option codes.

| DPLX | 00h |
|------|-----|
| LCF  | 01h |
| LCS  | 02h |
| MBS  | 03h |

(2) When there is no response to the maintenance mode request command and the designated option code, the personal computer 46 sends the same code every second.

(3) When power is given and the optional device receives the designated option code after its initialization is complete, the option device sends an option ID code to the personal computer 46. The option ID code is the same as the designated option code.

(4) After receiving the option ID code from the optional device, the personal computer 46 send a maintenance request command to the optional device.

The maintenance request command is the same as the designated option code.

In Fig. 13, T5 is the time sufficient for the invoking of the application program of the personal computer 46 after power is given to the personal computer 46, T6 is the resend interval (1 sec.) for the maintenance request command when no power is given to the optional device, T7 is the time from the power ON of the optional device to the end of initialization, and T8 is the maximum wait time (100 msec.) from the transmission of the option ID code to the reception of echo back.

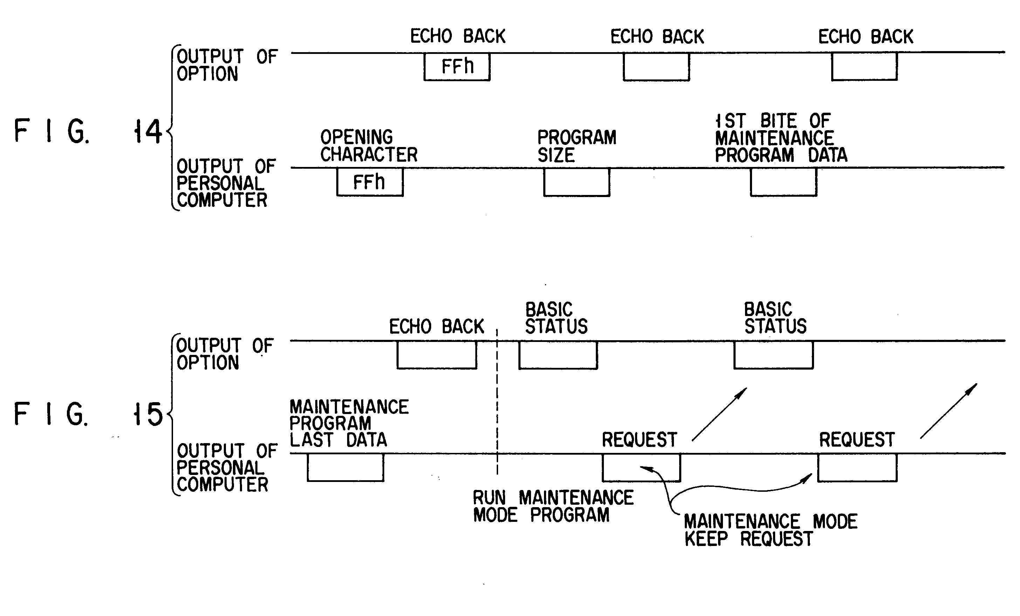

Fig. 14 is a timing chart from the transmission of an opening character to the beginning of program loading, and Fig. 15 is a timing chart from the end of program loading, to the execution of the program and to data transmission. The protocol will be described with reference to the timing charts given in Figs. 14 and 15.

When the maintenance mode is invoked, the optional device loads the maintenance program.

The maintenance program is sent in the following sequence.

. opening character (FFh)

. program size

. maintenance program data

The optional device sends back (echo back) the received data to the personal computer 46 and maps the data in the RAM in the controller (3a, 4a, 5, 6a, 7a or 8a) designated by the maintenance program. Due to the limited RAM area, the maximum size of the maintenance program is 26 bytes.

When the personal computer 46 checks the echoed-back data and finds a transfer error, the computer 46 initializes the optional device and executes the program transmission again.

When the loading of the maintenance program is complete, the program is executed.

During the execution of the maintenance program, the optional device sends a basic status to the personal computer 46. The personal computer 46 sends one of the following two requests to the optional device in response to the basic status.

. maintenance-mode keep request (B1h)

. maintenance-mode stop request (1Bh)

The maintenance-mode stop request is sent only when the "ESC" key of the personal computer 46 is depressed in maintenance mode, or when the cover of the optional device is opened in maintenance mode and this opening of the cover is detected from the contents of the status returned in response to the maintenance-mode keep request command.

When the cover is opened or upon reception of the maintenance-mode stop request, the optional device initializes the hardware and performs a process to invoke the maintenance mode again.

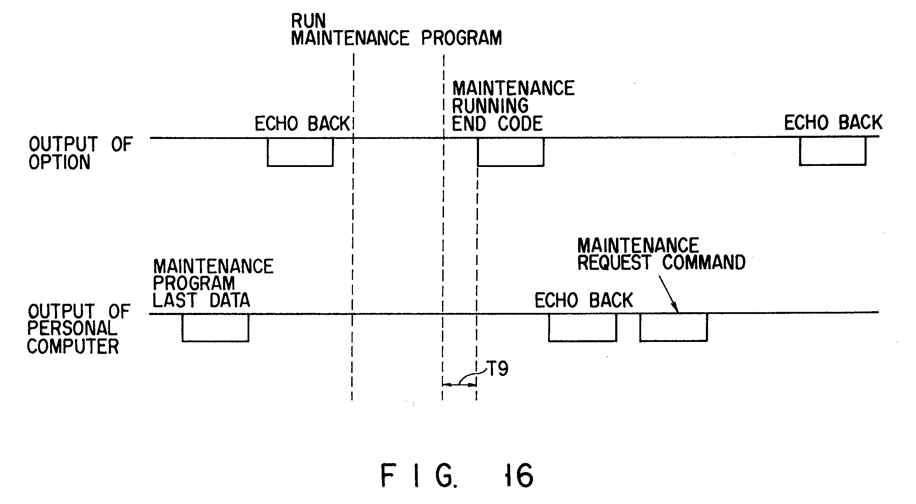

Fig. 16 is a timing chart from the end of program loading, to the end of the execution of the program and to the point of being ready for the next transmission. Re-invoking of the maintenance mode after program execution is complete will be described below referring to the timing chart shown in Fig. 16.

When the execution of the program is finished, the optional device sends a maintenance running end command (FFh) to the personal computer 46, and re-invokes the maintenance mode after receiving an echo back. Then, the optional device becomes ready to receive data of the maintenance mode request command from the personal computer 46 and keeps waiting until it receives this maintenance mode request command.

In Fig. 16, T9 is the time (2 sec.) from the end of the execution of the maintenance program to the end of the execution of the maintenance.

The program that is run in the aforementioned maintenance mode can self-diagnose the system, and the hardware, libraries, etc. that the program can use are the absolute addresses of controllers of the optional device.

As the program is called by a subroutine call from one task on the controller side of the optional device, the program should end with an end command (set command) (operation code E7). When one job cannot be stored in a 26-byte area, the program should be divided into a plurality of modules, which are in turn executed. Because hardware differs from one optional device to another, the aforementioned maintenance mode menu also differs from one optional device to another. The maintenance menues of the individual optional devices are given below. It should be noted that the menu of the paper-reversing section 3 is common to the individual optional devices.

(1) Paper-feeding section (ADD) 4
   1. Motor test
      Drive the motor 213, thereby rotating rollers 89a and 89b.
   2. Gate solenoid test
      Drive the gate solenoid 215, thereby switching the position of the sorting gate 88.
   3. Aligning solenoid test
      Drive the aligning solenoid 217.
   4. Option F/W version display
      Send to the PC the information identifying the F/W version for the ROM incorporated in the control circuit 211.
(2) Large-capacity feeder (LCF) 6
   1. Motor test
      Drive the pulse motor 238, thereby rotating the rollers 116a and 116b.
   2. Paper feed solenoid test
      Drive the paper feed solenoid 240.
   3. Aligning solenoid test
      Drive the aligning solenoid 242.
   4. Option F/W version display
      Send to the PC the information identifying the F/W version for the ROM incorporated in the control circuit 231.
(3) Large-capacity stacker (LCS) 7
   1. Motor test
      Drive the pulse motor 259, thereby rotating the paper-discharging rollers 125
   2. Jogger test
      Drive the pulse motor 259, thereby rotating the rollers 125, and drive the electromagnetic clutch 261, thereby rotating the rollers 125 to perform the jogger action.
   3. Option F/W version display
      Send to the PC the information identifying the F/W version for the ROM incorporated in the control circuit 251.
(4) Mail box stacker (MBS) 8
   1. Motor test
      Drive the motor 275, thereby rotating the rollers 149, 150, and 153.
   2. Gate solenoid test
      Drive the gate solenoid 277, thereby moving the sorting gate.

3. Option F/W version display

Send to the PC the information identifying the F/W version for the ROM incorporated in the control circuit 261.

(5) Paper-reversing section (EXG) 3

1. Motor test

Drive the motor 203, thereby rotating the paperdischarging rollers 81.

2. Gate solenoid test

Drive the gate solenoid 205, thereby moving the sorting gate 84.

3. Feed solenoid test

Drive the field solenoid 207.

In this feed solenoid test, after the motor is rotated for 2 sec., the feed solenoid is excited for 4 sec. and is then de-excited for 4 sec., and this cycle of alternate excitation and de-excitation is executed ten times before the motor is stopped. This test involves a first program for rotating the motor in accordance with the amount of data and a second program for exciting and de-exciting the solenoid.

The paper feeder 2 as an optional device may also be connected by the cable 165 so that it receives the signal supplied over the cable 166 to execute the test-maintenance process.

As described above, the personal computer 46 is connected to the option I/F connector 1c of the engine control section 43, the test/maintenance program is downloaded to the RAM 43c in the engine control section 43, and the test/maintenance process is executed by the downloaded test/maintenance program.

That is, in the actual invoking of the program, the personal computer 46 returns the status in response to the computer (46)-connection check command that is sent from the engine control section 43 when power is given. From this status signal, the engine control section 43 can determine if the personal computer 46 is connected to the laser printer 1.

Upon reception of this status, the engine control section 43 changes its role to a slave from a master and waits for data from the computer 46. Thereafter, the data from the computer 46 is mapped into the RAM 43c in the engine control section 43, and the program is executed after its loading is complete.

With the above design, the engine control section 43 of the laser printer 1 can be constituted of a one-chip microprocessor, the test/maintenance process can be executed easily, and the maintenance program need not be held in the ROM 43b in the engine control section 43. In addition, new maintenance menues can be added after shipment without altering the engine control section 43.

The test/maintenance process may also be executed by connecting the personal computer 46 to an optional device, setting the computer 46 as a master and the optional device as a slave, downloading the test/maintenance program into the optional device from the computer 46, and executing this downloaded program.

In short, this invention can provide an image forming apparatus whose control processor can be constituted of a one-chip microprocessor, and which can execute the test/maintenance process easily, does not need to have a built-in test/maintenance program, and can permit addition of new maintenance menues after shipment without altering the image forming apparatus side.

## Claims

1. An image forming apparatus, comprising:

means (1) for forming an image corresponding to image data, supplied from a first external device, on an image-forming medium;

means (43) for receiving an operation test program supplied from a second external device, the operation test program performing a test by which tested is whether or not the forming means properly acts;

means (43c) for storing the operation test program received from the receiving means;

means (1) for performing the test for the forming means in accordance with the operation test program stored in the storing means; and

means (43) for preventing the image-forming apparatus from receiving image data from the first external device when the performing means performs the test.

2. An image forming apparatus according to claim 1, characterized in that a communication protocol of the receiving means (43) is a clock asynchronous serial interface.

**3.** An image forming apparatus according to claim 1, characterized in that the test-performing means (1) does not perform the test while the image-forming means (1) is forming an image.

**4.** An image forming apparatus according to claim 1, characterized by further comprising:

first judging means (43) for judging connection of the image-forming means to the external device; and

means (43) for controlling the receiving means to receive and the storing means (43c) to store the program when the judging means judges that the connection is established.

**5.** An image forming apparatus according to claim 4, characterized by further comprising:

an additional unit (2-7) for handling the image forming medium on which the image forming means forms the image, to be connected to the image-forming means; and

second judging means (43) for judging connection of the image-forming means (1) to the additional unit (2-7) when the first judging means (43) judges that the connection between the image-forming means (1) to the external device (46, 47) is not established.

**6.** An image forming apparatus according to claim 1, characterized in that the receiving means (43) divides the program into subprograms and storing the subprogram into the storing means.

**7.** An image forming apparatus according to claim 1, characterized by further comprising additional units (2-7) for a printing operation to be connected to the image-forming means (1).

**8.** An image forming apparatus according to claim 7, characterized in that the additional units (2-7) include a paper-reversing section (3) a paper-feeding section (4), a large-capacity feeder (6), a large-capacity stacker (7) and a mail box stacker (8).

**9.** An image forming apparatus according to claim 7, characterized in that the program includes an test program testing whether the additional units (2-7) properly acts or not.

**10.** An image forming apparatus according to claim 1, characterized by further comprising:

second means (43) for receiving image data from a second external device, the forming means forming an image corresponding to the received image data by the receiving means.

**11.** An image forming apparatus according to claim 10, characterized by further comprising:

means (43) for preventing the second receiving means from receiving the image data from the second external device when the first receiving means (43) receiving the operation test program from the first external device.

**12.** An image forming apparatus according to claim 1, characterized in that the receiving means (43) includes a second means (43c) for storing a program to perform the receiving action.

**13.** A method of a functional test of an image forming apparatus, comprising the steps of:

receiving (S8, S48) an operation test program for an image forming apparatus (1) for forming an image corresponding to externally-supplied image data, on an image-forming medium, into a data storing area (43c) in the image forming apparatus (1) from outside of the image forming apparatus, the operation test program performing a test by which tested is whether or not forming means properly acts; and

performing (S14, S44) the operation test program.

**14.** A method according to claim 13, characterized in that the performing step is not executed during the printing operation of the image forming apparatus.

**15.** A method according to claim 13, characterized in that the receiving step (S8, S48) divides the program into subprograms and receives the subprograms to the data/storing area (43c).

**16.** A method according to claim 13, characterized by further comprising the steps of:

receiving (S8, S48) a second program for a functional test for additional units (2-7) for a printing operation, provided in the image forming apparatus (1), into the data storing area (43c); and

performing the second program.

F I G. 1

PERSONAL COMPUTER 46

HOST COMPUTER 10

TEST MAINTENANCE ADAPTER 47

48

PRINTER CONTROL SECTION 42

OPERATION PANEL 41

ENGIN CONTROL SECTION 43

SENSORS AND DRIVERS

43b 43c

166 167 168

169 43a 1b

165

7b 6c 6b 4c 4b 1c 3b 2b

4d

CONTROLLER 7a

CONTROLLER 6a

CONTROLLER 4a

CONTROLLER 3a

CONTROLLER 2a

SENSORS AND DRIVERS

SENSORS AND DRIVERS

SENSORS AND DRIVERS

SENSORS AND DRIVERS

SENSORS AND DRIVERS

7(8) 6 4 3 2

20

EP 0 602 325 A2

F I G. 2

FIG. 3

F I G. 4

START

INITIALIZE ENGINE
CONTROL SECTION — S1

SEND MAINTENANCE READY
COMMAND FROM OPTION
I/F CONNECTOR 1C — S2

S3
STATUS RECEIVED? — NO

YES

S4
MAINTENANCE-MODE
REQUEST STATUS
RECEIVED? — NO

YES

NORMAL MODE
PROCESS — S9

SEND OPENING
CHARACTER — S5

RECEIVE
PROGRAM SIZE — S6

SEND ECHO BACK — S7

PROGRAM
RECEIVING
OPERATION — S8

F I G. 5

EP 0 602 325 A2

OUTPUT OF ENGINE
CONTROL SECTION

MAINTENANCE
READY COMMAND

ECHO BACK

60h

MAINTENANCE
REQUEST
STATUS

FFh

OUTPUT OF
PERSONAL
COMPUTER

OPENING CHARACTER

60h

FFh

POWER SOURCE
OF PERSONAL
COMPUTER

T1

T2

T3

POWER SOURCE
ON

F I G. 6

EP 0 602 325 A2

```
              ┌──────────┐
              │  START   │
              └──────────┘
                   │
   ┌───────────────┤
   │        ┌──────────────────┐
   │        │ RECEIVE 2 BITES  │─ S11
   │        │ OF PROGRAM       │
   │        └──────────────────┘
   │               │
   │        ┌──────────────────┐
   │        │ SEND ECHO BACK   │─ S12
   │        └──────────────────┘
   │               │
   │          ╱─────────╲  S13
   │  NO    ╱ ALL PROGRAMS ╲
   └───────╲ RECEIVED ?    ╱
            ╲─────────────╱
                │ YES
        ┌──────────────────┐
        │ RUN RECEPTION    │─ S14
        │ PROGRAM          │
        └──────────────────┘
                │
   ┌────────────┤
   │    ┌──────────────────┐
   │    │ SEND MAINTENANCE │─ S15
   │    │ READY COMMAND    │
   │    └──────────────────┘
   │            │
   │      ╱───────────────╲  S16
   │    ╱ MAINTENANCE MODE  ╲ NO
   └───╲ REQUEST STATUS     ╱───┘
        ╲ RECEIVED ?       ╱
         ╲────────────────╱
              │ YES
        ┌──────────────────┐
        │ SEND OPENING     │─ S17
        │ CHARACTER        │
        └──────────────────┘
                │
        ┌──────────────────┐
        │ RECEIVE          │─ S18
        │ PROGRAM SIZE     │
        └──────────────────┘
                │
        ┌──────────────────┐
        │ SEND ECHO BACK   │─ S19
        └──────────────────┘
                │
              ┌──────────┐
              │   END    │
              └──────────┘
```

F I G. 7

26

FIG.8

OUTPUT OF ENGINE CONTROL SECTION
ECHO BACK — FFh — ECHO BACK — ECHO BACK

OUTPUT OF PERSONAL COMPUTER
OPENING CHARACTER — FFh — PROGRAM SIZE — 1ST BITE OF SPECIAL MODE PROGRAM

FIG.9

OUTPUT OF ENGINE CONTROL SECTION
ECHO BACK — RETURN DATA (1 BITE) — RETURN DATA (1 BITE)

OUTPUT OF PERSONAL COMPUTER
LAST PROGRAM — DATA SEND REQUEST COMMAND — 8Fh — DATA SEND REQUEST COMMAND — 8Fh

EXECUTION OF SPECIAL MODE PROGRAM

FIG.10

OUTPUT OF ENGINE CONTROL SECTION
ECHO BACK — SPECIAL MODE — ECHO BACK — FFh

OUTPUT OF PERSONAL COMPUTER
256TH BITE OF SPECIAL MODE PROGRAM — RUN PROGRAM — OPENING CHARACTER — FFh

END

EP 0 602 325 A2

F I G. 11

① 

ENABLE COMMUNICATION — S32

② 

PRINT COMMAND ? — S33 — NO

YES

S34 — PRINT OPERATION

SET TEST/ MAINTENANCE FLAG ? — S41 — NO

S35 — PRINTING COMPLETE ? — YES

② 

YES

LOADING OF TEST/ MAINTENANCE PROGRAM COMPLETE ? — S42 — NO

NO

S36 — TEST/ MAINTENANCE FLAG SET ? — NO

YES

ENABLE COMMUNICATION — S43

S37 — LOADING OF MAINTENANCE PROGRAM ? — YES

LOADING OF TEST MAINTENANCE PROGRAM ? — S47 — NO

NO

S38 — LOADING OF MAINTENANCE PROGRAM ? — NO

RUN TEST/ MAINTENANCE PROGRAM — S44

YES

LOAD TEST/ MAINTENANCE PROGRAM — S48

YES

RESET TEST/ MAINTENANCE PROGRAM LOAD-END FLAG — S45

S39 — LOAD TEST/ MAINTENANCE PROGRAM

SET TEST/ MAINTENANCE PROGRAM LOAD-END FLAG — S49

S40 — SET TEST/ MAINTENANCE PROGRAM LOAD-END FLAG

ENABLE COMMUNICATION — S46

F I G. 12

29

F I G. 13

EP 0 602 325 A2

F I G. 14

| | ECHO BACK | ECHO BACK | ECHO BACK |
|---|---|---|---|
| OUTPUT OF OPTION | FFh | | |

| | OPENING CHARACTER | PROGRAM SIZE | 1ST BITE OF MAINTENANCE PROGRAM DATA |
|---|---|---|---|
| OUTPUT OF PERSONAL COMPUTER | FFh | | |

F I G. 15

| | ECHO BACK | BASIC STATUS | BASIC STATUS |
|---|---|---|---|
| OUTPUT OF OPTION | | | |

| | MAINTENANCE PROGRAM LAST DATA | REQUEST | REQUEST |
|---|---|---|---|
| OUTPUT OF PERSONAL COMPUTER | | | |

RUN MAINTENANCE MODE PROGRAM

MAINTENANCE MODE KEEP REQUEST

EP 0 602 325 A2

F I G. 16

F I G. 17

F I G. 18

**91** SENSOR

**211** CONTROL CIRCUIT

**4**

**214** DRIVER

**213** MOTOR

SENSOR

**92**

**216** DRIVER

**215** GATE SOLENOID

**218** DRIVER

**217** ALIGNING SOLENOID

REVERSING SECTION I/F CONNECTOR **4e**

OPTION I/F CONNECTOR **4c**

OPTION I/F CONNECTOR **4d**

**222a** CPU

**222b** ROM

**222c** RAM

DOOR SWITCH **212**

**221** MAIN SWITCH

**4b** FUSE

**220** NOISE FILTER

**219** STEPPING TRANSFORMER

INLET **4a**

F I G. 19

SENSOR — 117

EMPTY SENSOR — 105

ELEVATOR UPPER LIMIT SENSOR — 106

ELEVATOR DOWN LIMIT SENSOR — 107

ELEVATOR DOWN SWITCH — 232

SIDE COVER SWITCH — 233

FRONT COVER SWITCH — 234

CONTROL CIRCUIT — 231

CPU — 247a
ROM — 247b
RAM — 247c

6

DRIVER — 237 → ELEVATOR MOTOR — 236

DRIVER — 239 → PULSE MOTOR — 238

DRIVER — 241 → FEED SOLENOID — 240

DRIVER — 243 → ALIGNING SOLENOID — 242

REVERSING SECTION I/F CONNECTOR — 6g

OPTION I/F CONNECTOR — 6e

OPTION I/F CONNECTOR — 6f

PRE-FEED SENSOR — 113

UPPER DEVICE SENSOR — 235

MAIN SWITCH — 246

FUSE — 6c

NOISE FILTER — 245

STEPPING TRANSFORMER — 244

INLET — 6a

OUTLET — 6b

F I G. 20

35

127

SENSOR

251

7

258

DRIVER

257

ELEVATOR MOTOR

135

PAPER EMPTY SENSOR

CONTROL CIRCUIT

260

DRIVER

259

PULSE MOTOR

136

ELEVATOR UPPER LIMIT SENSOR

262

DRIVER

261

ELECTOO-MAGNETIC CLUTCH

137

ELEVATOR DOWN LIMIT SENSOR

252

ELEVATOR DOWN SWITCH

REVERSING SECTION I/F CONNECTOR

7f

254

FRONT COVER SWITCH

OPTION I/F CONNECTOR

7e

139

SIDE COVER SWITCH

JOG SENSOR

256

268a — CPU
268b — ROM
268c — RAM

MACH DEVICE SWITCH

255

267

MAIN SWITCH

7c

FUSE

266

NOISE FILTER

265

STEPPING TRANSFORMER

INLET

OUTLET

7a

7b

# F I G. 21

EP 0 602 325 A2

F I G. 22

37